Europäisches Patentamt

European Patent Office

Office européen des brevets

(11) Publication number: **0 305 728**
**B1**

(12) **EUROPEAN PATENT SPECIFICATION**

(45) Date of publication of patent specification: **09.01.91**

(21) Application number: **88112029.9**

(22) Date of filing: **26.07.88**

(51) Int. Cl.⁵: **F 16 F 1/38**

(54) **Supporting element for motor vehicles engines.**

(30) Priority: **04.09.87 IT 2179187**

(43) Date of publication of application:
**08.03.89 Bulletin 89/10**

(45) Publication of the grant of the patent:
**09.01.91 Bulletin 91/02**

(84) Designated Contracting States:
**DE ES FR**

(56) References cited:
**DE-A-2 310 560**
**DE-U-1 751 917**
**FR-A-1 538 189**

(73) Proprietor: **PIRELLI SISTEMI ANTIVIBRANTI S.P.A.**
**Piazzale Cadorna, 5**
**I-20123 Milan (IT)**

(72) Inventor: **Seghi, Paolo**
**Via Freikofel, 19/2**
**I-20138 Milan (IT)**

(74) Representative: **Giannesi, Pier Giovanni et al**
**Pirelli S.p.A. Direzione Brevetti Piazzale Cadorna, 5**
**I-20123 Milano (IT)**

## Description

The present invention refers to a supporting element for motor-vehicles engines of the type comprising a sustaining collar having a substantially tubular configuration, an elastic ring formed in elastomeric material and attached to the inside surface of the sustaining collar, a pushing element attached to the inside surface of said elastic ring, an extension limiting cap rigidly engaged at the lower extremity of the pushing element and having a peripheral portion that protrudes radially with respect to the same pushing element, and wherein the said elastic ring is formed at its inner periphery with an axially extending projection which is engaged by said peripheral portion of the cap. Such an element is known from DE—U—1751917.

As is known, motor-vehicle engines are, generally, elastically sustained with respect to the bearing structure of the respective motor-vehicle by suitable supporting elements.

These supporting elements generally comprise a sustaining collar presenting a configuration substantially tubular and rigidly engageable to the unit body of the motor-vehicle.

Inside the sustaining collar is rigidly engaged, through a rubber-metal connection, to, an elastic ring to the inside of which is fixed also by a rubber-metal connection a pushing element, to which the engine is connected.

The above mentioned ring is capable of elastically deforming owing to the weight and the vibrations transmitted by the engine, said vibrations tending to coaxially displace the pushing element with respect to the sustaining collar.

Generally, to avoid possible disengagements between the elastic ring and the metallic parts to which the elastic ring is welded, it is necessary to act so that the same elastic ring, during the operation of the supporting element, can be elastically deformed under the effect of compression stresses.

To satisfy this necessity it is presently foreseen that the sustaining collar and the pushing element are substantially shaped as a truncated cone.

The elastic ring is designed in order to maintain, in absence of stresses, the pushing element slightly higher than the collar.

These modifications allow that, when the pushing element is moved towards the inside of the collar owing to the weight of the engine, the elastic ring is compressed between the surfaces of the pushing element and the collar.

However, it is noted that in the supporting elements realized according to the known technique, the elastic ring is in many cases, subject to a tensile stress in the vicinity of where its bottom edge is fastened to the pushing element.

This anomalous operating condition leads sooner or later to the disengagement of the elastic ring from the pushing element, negatively and considerably affecting both the efficacy and the operational life of the supporting element.

The main purpose of the present invention is that of eliminating the above mentioned drawback, by a supporting element realized in such a manner to considerably reduce or, even, cancel the tensile stresses on the bottom edge of the elastic ring where it is attached to the pushing element.

This aim and others, which will become apparent from the following detailed description, are substantially achieved by a supporting element for motor-vehicle engines, characterized by the fact that said projection is pre-stressed between the peripheral portion of said cap and a bearing seat formed along an edge of the lower extremity of the pushing element.

Further characteristics and advantages will become more apparent from the following detailed description of a preferred but not exclusive embodiment of a supporting element for motor-vehicle engines according to the present invention, given hereinafter with reference to the attached drawings, supplied only by way of not-limiting example, in which:

Figure 1 is a cross-section view of the supporting element in reference at rest;

Figure 2 shows the supporting element of Figure 1 in operating conditions;

Figure 3 shows, by an enlarged scale and a sectional view, a particular of the elastic ring foreseen in the supporting element according to the invention, in absence of the extension limiting cap.

With reference to said figures, in 1 has been globally indicated a supporting element for motor-vehicle engines according to the present invention.

The supporting element 1 comprises a sustaining collar 2 presenting a substantially tubular truncated cone configuration diverging upwardly.

The collar 2 is suitable to be fixed to a bearing structure of a motor-vehicle or like by means of a fastening flange 3 radially extending from the upper extremity of the same collar.

Inside, the collar 2 is fixed, by a rubber-metal connection, to an elastic ring 4 made of elastomeric material and presenting a substantially truncated cone shape converging upwardly.

Inside the ring 4 is disposed a pushing element 5 fixed to the same ring, through a rubber-metal joint and presenting a truncated cone configuration converging downwardly.

The pushing element 5 is suitable to be connected to a motor-vehicle engine by a threaded element 6 extending through a trough-hole in the pusing element.

During operation, the ring 4 is subjected to an elastic deformation under the effect of the load and of other possible stresses transmitted by the engine through the pushing element 5.

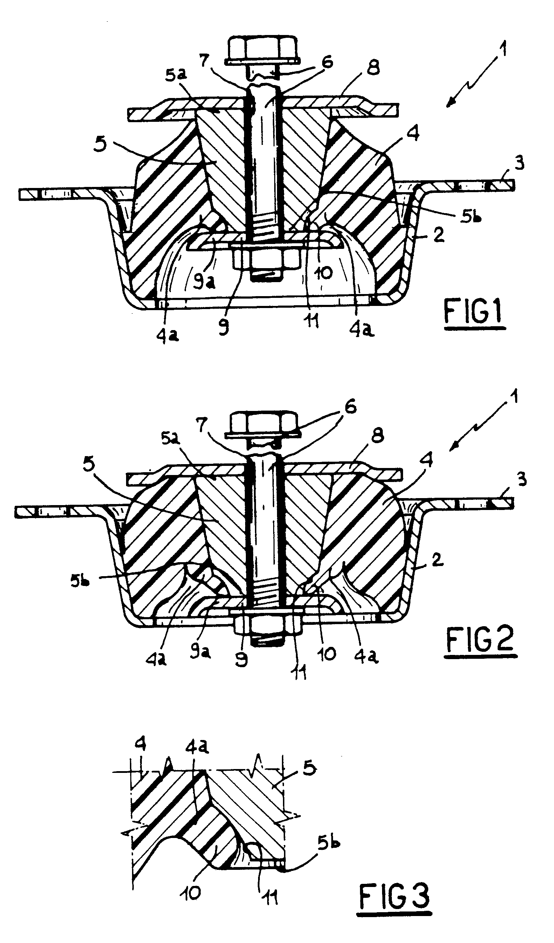

On an upper end 5a of the pushing element 5 is conventionally fixed, through the threaded element 6, a first compression limiting cap 8 that, as shown in Figure 2, is designed to progressively enter into abutment with the surface of the elastic ring 4 when the supporting element 1 is subjected to the weight of the engine.

2

On the lower end 5b of the pushing element 5, it is also fixed, through the threaded element 6, a second extension limiting cap 9 conventionally designed to enter into abutment with the elastic ring 4 when the supporting element 1 is subjected, for any reason, to stresses tending to lift the same pushing element with respect to the sustaining collar 2.

According to the present invention, the second cap 9, besides carrying out the described operation, is designed to assume new operating aspects which will be better apparent in the description given hereinafter.

The structural configurations of the sustaining collar 2 of the pushing element 5 and of the elastic ring 4 have been designed so as, during the operation, the elastic ring 4 is substantially subjected to compression stresses.

In fact, as it can be seen by the comparison between figures 1 and 2, the translation of the pushing element 5 towards the inside of the sustaining collar 2 determines a reduction of the space existing between the outer surface of the pushing element and the inner surface of the collar.

Consequently, the elastic ring 5 is substantially compressed between said surfaces.

It is however noted that near the lower fastening edge between the elastic ring 4 and the pushing element 5 there is a portion of the same ring, marked with 4a, which would tend to be tensile stressed during the operation of the supporting element 1.

According to the present invention and with particular reference to Figure 3, it is therefore foreseen that the elastic ring 4 is provided with an inner peripheral projection 10 which protrudes from the same, near the pushing element 5, adjacent a bearing seat 11 preferably constituted by a recess having a curvilineal profile, formed along the edge of the lower end 5b.

The peripheral projection 10 presents, preferably, a section having a roundish profile and it is structured so as to protrude downwardly with respect to the end 5b of the pushing element 5 when the second extension limiting cap 9 is not engaged with the latter (Fig. 3).

When the second cap 9 is fixed to the end 5b, the peripheral projection 10 is compressed between a peripheral portion 9a of the same cap and the bearing seat 11.

By this way, the zones 4a of the elastic ring 4 is subjected to a prestress condition which is highest when the supporting element 1 is not subjected to any stress.

By the application and the progressive increase of loads on the supporting element 1, it is got a progressive decreasing of the compression stresses previously caused in the zone 4a in the described manner. On the contrary, with the known technique, it would happen the generation and the increase of tensile stresses in the zone 4a.

Advantageously giving a suitable structure and dimensions to the peripheral projection 10 and to the bearing seat 11 and, eventually, also to the second cap 9, it is possible to obtain that the zone 4a is slightly compressed also when the supporting element 1 is subjected to stresses of the maximum, foreseen value.

By this way, there is guaranteed the complete absence of tensile stresses in the elastic ring 4, and in particular in the zone 4a, during the functioning of the supporting element 1.

The aims of the invention are therefore achieved.

As a matter of fact, by the reduction and/or the complete elimination of the above mentioned tensile stresses, there is cancelled any disengagement risk between the elastic ring 4 and the pushing element 5.

In such a connection it is pointed out that, in the known technique, such a disengagement was always originated in the region of the lower fastening edge between the elastic ring and the pushing element, namely in the zone in which the effects of the modifications according to the present invention allow the elimination of the causes of the same disengagement.

The reliability of the supporting elements of the type to which the invention relates is therefore improved.

## Claims

1. Supporting element (1) for motor-vehicle engines, comprising:

a sustaining collar (2) having a substantially tubular configuration;

an elastic ring (4) formed in elastomeric material and attached to the inside surface of the sustaining collar (2);

a pushing element (5) attached to the inside surface of said elastic ring (4);

an extension limiting cap (9) rigidly engaged at the lower extremity (3b) of the pushing element (5) and having a peripheral portion that protrudes radially with respect to the same pushing element (5), and wherein the said elastic ring (4) is formed at its inner periphery with an axially extending projection (10) which is engaged by said peripheral portion of the cap (9), characterized in that the projection (10) is pre-stressed between the peripheral portion (9a) of said cap (9) and a bearing seat (11) formed along an edge of the lower extremity of the pushing element.

2. Supporting element according to Claim 1, characterized by the fact that said bearing seat (11) is constituted by a recess having a curvilineal axial profile formed along the edge of the lower extremity (5b) of the pushing element (5).

3. Supporting element according to Claim 1, characterized by the fact that said axially extending projection (10) protrudes below the lower extremity of the pushing element before this latter is provided with said cap (9).

## Patentansprüche

1. Abstützelement (1) für Kraftfahrzeuge, umfassend:

einen Tragbund (2), der im wesentlichen rohrförmige Gestalt hat;

einen elastischen Ring (4), der aus elastomerem Material gebildet und an der Innenseitenfläche des Tragbundes (2) angebracht ist;

ein Schubelement (5), welches an der Innenseitenfläche des elastischen Ringes (4) angebracht ist;

eine Verlängerungsbegrenzungskappe (9), die am unteren Ende (3b) des Schubelementes (5) in starrem Eingriff steht und einen Umfangsteil hat, der mit bezug auf das gleiche Schubelement (5) radial vorragt, wobei der elastische Ring (4) an seinem Innenumfang mit einem sich axial erstreckenden Vorsprung (10) versehen ist, mit welchem der Umfangsteil der Kappe (9) im Eingriff steht, dadurch gekennzeichnet, daß der Vorsprung (10) zwischen dem Umfangsteil (9a) der Kappe (9) und einem Lagersitz (11), der entlang einer Kante des unteren Endes des Schubelementes gebildet ist, vorgespannt ist.

2. Abstützelement nach Anspruch 1, dadurch gekennzeichnet, daß der Lagersitz (11) durch eine Ausnehmung gebildet ist, die ein gekrümmtes axiales Profil hat, welches entlang der Kante des unteren Endes (5b) des Schubelementes (5) gebildet ist.

3. Abstützelement nach Anspruch 1, dadurch gekennzeichnet, daß der sich axial erstreckende Vorsprung (10) unter das untere Ende des Schubelementes vorragt, bevor das Schubelement mit der Kappe (9) versehen ist.

**Revendications**

1. Elément support (1) pour moteurs de véhicules automobiles, comprenant:

une virole de soutien (2) de configuration sensiblement tubulaire;

une bague élastique (4) formée d'une matière élastomère et fixée à la surface extérieure de la virole de soutien (2);

un élément de poussée (5) fixé à la surface intérieure de ladite bague élastique (4);

un chapeau de limitation de l'allongement (9) fixé rigidement à l'extrémité inférieure (3b) de l'élément de poussée (5) et possédant une portion périphérique qui fait saillie radialement par rapport à cet élément de poussée (5), et dans lequel ladite bague élastique (4) est munie, à sa périphérie intérieure, d'un bossage (10) faisant saillie axialement qui est en appui contre la dite portion périphérique du chapeau (9), caractérisé en ce que le bossage (10) est précontraint entre la portion périphérique (9a) dudit chapeau 9 et une portée (11) formée le long d'un bord de l'extrémité inférieure de l'élément de poussée.

2. Elément support selon la revendication 1, caractérisé en ce que ladite portée (11) est constituée par une gorge à profil axial curviligne, formée le long du bord de l'extrémité inférieure (5b) de l'élément de poussée (5).

3. Elément support selon la revendication 1, caractérisé en ce que ledit bossage (10) s'étendant axialement, qui déborde au-dessous de l'extrémité inférieure de l'élément de poussée lorsque ce dernier n'est pas encore muni dudit chapeau (9).

FIG1

FIG2

FIG3

1